# FASCICULE DE BREVET EUROPEEN

(11) **EP 2 640 639 B1**
(45) Date de publication et mention de la délivrance du brevet: **30.12.2015**
(21) Numéro de dépôt: 11802464.5
(22) Date de dépôt: 03.11.2011
(51) Int. Cl.: F02K 1/76, F02C 7/20, F01D 21/04, B64D 33/04, B64D 29/06

(54) **STRUCTURE DE RENFORCEMENT D'UNE NACELLE DE TURBORÉACTEUR**
VERSTÄRKUNGSSTRUKTUR FÜR EINE TL-TRIEBWERKSGONDEL
TURBOJET ENGINE NACELLE REINFORCING STRUCTURE

(30) Priorité: 16.11.2010 FR 1059392
(43) Date de publication de la demande: 25.09.2013
(73) Titulaire: Aircelle, 76700 Gonfreville l'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2011/052564
(87) Numéro de publication internationale: WO 2012/066211

(56) Documents cités:
- EP-A1- 0 393 259
- EP-A1- 0 875 674
- EP-A1- 1 488 999
- WO-A2-2008/043903
- FR-A1- 2 915 527

## Description

La présente invention se rapporte à une nacelle de turboréacteur.

Les nacelles modernes sont destinées à abriter un turboréacteur double flux apte à générer par l'intermédiaire de pâles d'une soufflante en rotation un flux d'air chaud (flux primaire) issu de la chambre de combustion du turboréacteur mais également un ensemble de dispositifs d'actionnement annexes liés à son fonctionnement et assurant diverses fonctions lorsque le turboréacteur est en fonctionnement ou à l'arrêt.

Une nacelle présente généralement une structure externe, dite Outer Fixed Structure (OFS), qui définit, avec une structure interne concentrique, dite Inner Fixed Structure (IFS), une veine visant à canaliser un flux d'air froid, dit secondaire, qui circule à l'extérieur du turboréacteur.

Les flux primaire et secondaire sont éjectés du turboréacteur par l'arrière de la nacelle.

De plus, une nacelle présente, généralement, une structure tubulaire comprenant une entrée d'air en amont du turboréacteur, une section médiane destinée à entourer la soufflante du turboréacteur, une section aval intégrant des moyens d'inversion de poussée et destinée à entourer la chambre de combustion du turboréacteur, et est généralement terminée par une tuyère d'éjection dont la sortie est située en aval du turboréacteur.

Le rôle de ces moyens d'inversion de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues de l'avion.

Une structure commune d'inverseur de poussée comprend un capotage dans lequel est ménagé une ouverture destinée au flux dévié qui, en situation de poussée directe des gaz, est fermée par un capot coulissant et qui, en situation d'inversion de poussée, est dégagée par déplacement en translation vers l'aval (par référence au sens d'écoulement des gaz) du capot coulissant, au moyen de vérins de déplacement du capot montés sur un cadre du capotage en amont de l'ouverture, appelé cadre avant.

La nacelle subissant en vol des efforts aérodynamiques axiaux tendant à faire reculer la structure par rapport au moteur, ce cadre avant est lié à la structure du turboréacteur, et, plus précisément, au carter de soufflante par l'intermédiaire de brides de raccordement ou de liaisons type couteau / gorge, par exemple.

Concernant le capot coulissant, il peut être formé d'un ensemble externe en une seule partie sans rupture en partie inférieur monté coulissant sur des rails disposés de part et d'autre d'un pylône de l'aéronef entre une position de jet direct et une position d'inversion de poussée.

Un tel capot est souvent désigné par les termes anglo-saxons « O-duct », par allusion à la forme de virole d'un tel capot, par opposition au « D-duct », qui comprend en fait deux demi-capots s'étendant chacun sur une demi-circonférence de la nacelle.

Il est bien entendu crucial qu'un mouvement de coulissement du capot mettant en oeuvre une inversion de poussée ne puisse pas se produire de manière inopinée : une telle ouverture serait en effet critique en phase de vol.

Pour ces raisons, des verrous de sécurité sont prévus à différents endroits de l'inverseur de poussée pour bloquer l'ouverture non souhaitée du capot.

Dans un inverseur à « D-duct », on prévoit classiquement trois verrous de sécurité pour chaque demi-capot ou pour les deux demi-capots si ceux-ci sont reliés mécaniquement entre eux. Deux verrous principaux sont habituellement disposés sur le cadre avant pour agir directement sur deux vérins d'actionnement de chaque demi-capot.

Or, ces verrous principaux peuvent devenir inopérants suite à la rupture d'un rotor ou d'une aube du turboréacteur, cette rupture provoquant la projection de débris autours du turboréacteur, ces débris venant impacter l'inverseur et étant susceptibles de déformer l'inverseur et/ou de détériorer des verrous.

Pour réduire très sensiblement le risque d'ouverture inopinée, on dispose alors un troisième verrou qui assure le maintien fermé de l'inverseur suite à la perte des deux autres lignes de défense consécutivement aux ruptures susmentionnées, ce troisième verrou étant interposé entre une poutre inférieur dite « 6 heures » (c'est-à-dire disposée dans la partie inférieure de la nacelle et sur laquelle les deux demi-capots sont montés coulissants) et le demi-capot concerné.

La localisation éloignée du troisième verrou par rapport aux deux autres verrous principaux offre un gain de sécurité vis-à-vis d'un « rotor burst » (explosion d'un disque du rotor du turboréacteur) ou d'une perte d'aube.

Dans un tel cas, seuls un ou deux verrous pourrait éventuellement être détruits par le même disque, mais pas tous.

Un chemin d'effort est ainsi préservé entre le mât réacteur et la poutre inférieure. Si cette poutre inférieure se trouvait coupée, il resterait un chemin d'effort reliant le mât réacteur au verrou grâce à la présence de la structure interne dite IFS, qui relie les poutres supérieures et inférieures sur toute leur longueur.

Dans le cas d'un inverseur de type O-duct, une disposition semblable serait souhaitable malgré l'absence de la poutre inférieure.

On peut ainsi envisager de positionner une troisième ligne de défense et/ou un dispositif d'inhibition entre le cadre avant et le capot coulissant.

Or, ces verrous sont encombrants et ils deviennent difficiles à disposer lorsque l'inverseur est très mince, c'est à dire que la distance entre le capotage intérieur et le capotage extérieur est réduite.

Quelque soit l'aménagement prévu de ces verrous, le risque de voir l'inverseur et plus particulièrement l'interface du cadre avant et du carter de soufflante se déformer et se détériorer suite à un éclatement de disque de rotor n'est pas nul, rendant inefficace l'installation d'une troisième ligne de défense entre le cadre avant et le capot coulissant.

En effet, l'éclatement d'un disque moteur se traduit par l'éjection d'un tiers de disque à énergie considérée infinie, de fragments intermédiaires (parties de disques de plus petite taille) d'énergie significative et de petits fragments (généralement des éléments d'aube de turbine ou de compresseur) d'énergie faible.

Les fragments intermédiaires pouvant être éjectés sur l'ensemble de la circonférence du capot, il existe un risque que le dispositif de rétention entre le cadre avant et le carter de soufflante ne soit pas suffisant pour retenir axialement le capot d'inversion de poussée.

Pour résoudre ce problème, il est connu de placer la troisième ligne de défense soit le troisième verrou au niveau de l'extrémité arrière des rails supportant le capot, interposée entre ledit pylône et ledit capot. Pour les mêmes raisons, le dispositif d'inhibition mécanique de l'inverseur de poussée et placé dans la même zone

La présence de ces moyens de verrouillage à l"interface entre le capot et le pylône permet de réaliser un verrouillage géographiquement indépendant de l'interface antre le cadre avant et le carter de soufflante, offrant ainsi les degrés de fiabilité et de sécurité recherchés.

Toutefois, ce type de montage induit des difficultés d'accès et de vérification visuelle, ce qui pose, notamment, problème pour utiliser un dispositif d'inhibition mécanique de l'inverseur de poussée disposé à cet endroit. Une nacelle comprenant une structure de renforcement est connue de EP 1 488 999 A1, qui est considéré comme l'art antérieur le plus proche et décrit les caractéristiques du préambule de la revendication 1

Un but de la présente invention est de remédier à ces inconvénients en proposant une solution alternative au montage d'une troisième ligne de défense et/ ou de dispositif d'inhibition entre le pylône et le capot.

Il est également désirable de proposer une implantation d'un troisième verrou de sécurité dans un inverseur de type « O-duct », qui procure le même degré de fiabilité et de sécurité que celui d'un inverseur à « D-duct » vis-à-vis d'un risque d'ouverture intempestif du capot coulissant.

Il est également avantageux de proposer une nacelle comprenant un inverseur de type « O-duct » dans laquelle un troisième verrou de sécurité et/ou d'inhibition est mis en place dans une zone conventionnelle.

Un autre but de la présente invention est de proposer une nacelle comprenant un troisième verrou de sécurité et/ou d'inhibition peu encombrant et facilement accessible par un opérateur.

Un autre but de la présente invention est de proposer une nacelle dans laquelle les déformations accidentelles de l'inverseur pouvant résulter d'impacts liés, notamment, à l'éclatement de disques de moteur sont diminuées.

Il est également désirable de proposer une nacelle dans laquelle on réduit significativement les risques de perte axiale du cadre avant et du capot d'inversion de poussée pouvant résulter d'impacts liés, notamment, à l'éclatement de disques de moteur.

A cet effet, l'invention propose une nacelle de turboréacteur comprenant une structure fixe comprenant un carter de soufflante dudit turboréacteur et un cadre avant adapté pour être monté en aval dudit carter de soufflante et supportant directement ou indirectement au moins un moyen de déviation de flux, ledit cadre avant étant apte à coopérer avec un capot d'inversion de poussée coulissant entre une position de fermeture recouvrant le moyen de déviation de flux et une position d'ouverture exposant ce moyen de déviation permettant un flux dévié remarquable en ce qu'elle comprend, en outre, au moins une structure de renforcement conçue pour transmettre des efforts entre le carter de soufflante et le cadre avant, ladite structure de renforcement s'étendant suivant l'axe longitudinal de la nacelle depuis le carter de soufflante vers le cadre avant et étant adaptée pour supporter une troisième ligne de défense et/ou un dispositif d'inhibition entre le cadre avant et le capot d'inversion de poussée.

Grâce à la présente invention, on crée des passages d'effort secondaires entre le capot de soufflante et le cadre avant adaptés pour être actifs en cas de détérioration de la liaison principale entre le carter de soufflante et le cadre avant permettant ainsi de maintenir la tenue axiale du cadre avant et du capot d'inversion avec le carter de soufflante.

Selon des modes particuliers de réalisation, l'ensemble peut comprendre l'une ou plusieurs des caractéristiques suivantes, prises isolément ou selon toutes les combinaisons techniquement possibles :
- la structure de renforcement comprend un caisson creux fixé sur sa longueur sur la circonférence du cadre avant et adapté pour être fixé au niveau d'une extrémité amont au carter de soufflante ;
- la nacelle comprend au moins deux structures de renforcement espacées angulairement le long de la circonférence du cadre avant ;
- l'espacement angulaire entre les deux structures de renforcement est conçu de sorte qu'elles sont suffisamment écartées l'un de l'autre angulairement de façon à ce qu'une seule soit impacté par un tiers de disque ;
- la nacelle comprend deux structures de renforcement disposées dans une zone « 6 heures » ;
- chaque structure de renforcement est montée entre deux moyens de déviation adjacents ;
- chaque structure de renforcement est montée à proximité d'actionneurs du capot ;
- chaque structure de renforcement est adaptée pour recevoir, chacune, un actionneur du capot ;
- la structure de renforcement est prolongée par une ferrure d'attache adaptée pour fixer un dispositif d'inhibition de l'inverseur de la nacelle et/ou une troisième ligne de défense ;
- la nacelle comprend, en outre, un dispositif de verrouillage du passage d'effort créé entre le carter de soufflante et le cadre avant par la structure de renforcement ;
- le dispositif de verrouillage comprend un organe de retenue équipant la structure de renforcement destiné à coopérer avec un organe de retenue équipant le carter de soufflante, les deux organes de retenue étant adaptés pour être verrouillées par un organe de verrouillage complémentaire solidaire d'un capot de soufflante destiné à recouvrir le carter de soufflante ;
- le dispositif de verrouillage s'étend dans un plan radial du carter de soufflante ;
- les organes de retenue sont formés par des ferrures radiales comprenant, chacune, un alésage en regard susceptible de recevoir et retenir lorsque nécessaire l'organe de verrouillage, ces alésages étant adaptés pour que l'organe de verrouillage, lorsqu'il traverse ces alésages, fasse obstacle au déplacement du cadre avant avec un jeu suffisant minimisant ou empêchant le passage d'efforts en fonctionnement normal;
- l'organe de verrouillage comprend une broche de blocage mobile entre une position dans laquelle elle est écartée des organes de retenue et permet une translation du cadre avant et une position dans laquelle elle vient en prise avec les organes de retenue pour empêcher le coulissement du cadre avant en aval de la nacelle ;
- les moyens de commande du dispositif de verrouillage sont liés à l'ouverture ou la fermeture du capot de soufflante.

D'autres aspects, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- La figure 1 représente une vue en perspective partielle d'une nacelle dont le capot d'inversion a été écarté latéralement ;
- La figure 2 représente une vue schématique en coupe d'aménagement de structures de renforcement sur un inverseur de poussée de la nacelle de la figure 1 ;
- La figure 3 illustre la nacelle de la figure 1 en perspective dans laquelle sont ménagées des structures de renforcement selon un autre mode de réalisation de la présente invention ;
- Les figures 4 et 5 sont des vues respectivement en coupe et en perspective latérale d'une structure de renforcement selon une variante de réalisation de la présente invention ;
- Les figures 6 à 8 sont des vues respectivement en coupe longitudinale et transversale d'un dispositif de verrouillage entre un capot de soufflante et un cadre avant de la nacelle de la figure 1, ce dispositif étant en position verrouillé sur les figures 6 et 7 et en position déverrouillée sur la figure 8 ;
- La figure 9 illustre une vue en perspective de la nacelle de la figure 1 dont l'inverseur de poussée est dans une position active dans laquelle le capot d'inversion a été translaté dans sa position d'ouverture vers l'aval de la nacelle.

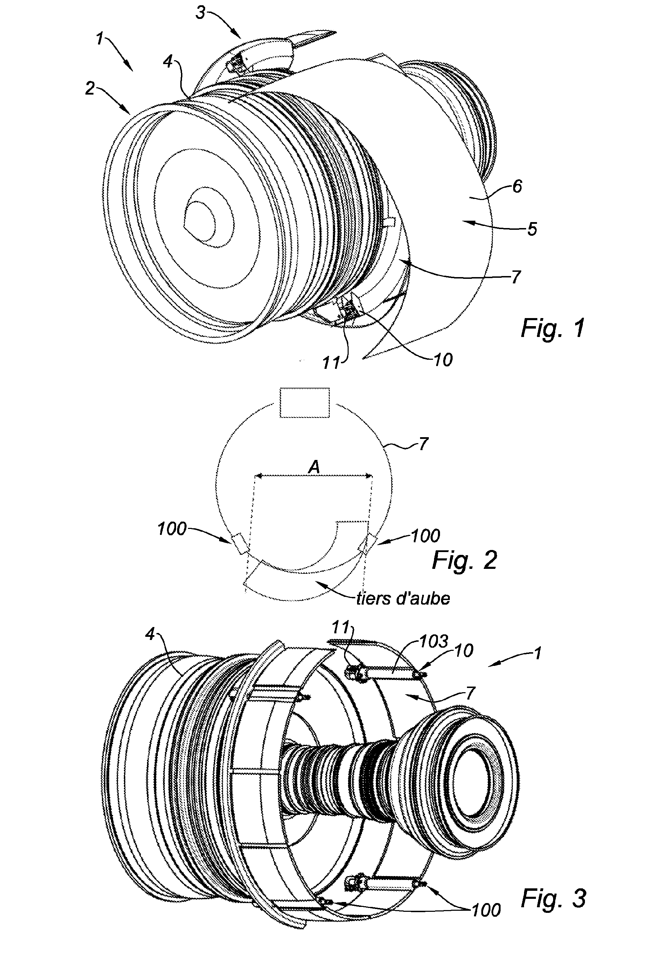

De façon classique, un ensemble propulsif d'aéronef comprend une nacelle entourant un turboréacteur dont la référence générale sur la figure 1 est 1, qui présentent tous les deux un axe longitudinal principal.

La nacelle 1 constitue un logement tubulaire pour le turboréacteur dont elle sert à canaliser les flux d'air qu'il génère et est destinée à être rattachée sous une aile d'un aéronef par l'intermédiaire d'un pylône (non visible sur la figure 1) orienté vers l'avant de l'aéronef.

Plus précisément, la nacelle 1 possède une structure externe comprenant une section avant formant une entrée d'air, une section médiane 2 entourant une soufflante du turboréacteur, et une section arrière 3 entourant le moteur.

Elle comprend également une structure interne de carénage du moteur définissant avec la structure externe une veine destinée à la circulation d'un flux d'air froid dans le cas d'un turboréacteur double flux.

Plus précisément, la section arrière 3 comprend une structure externe assurant la continuité aérodynamique avec la section médiane 2 qui comporte un carter de soufflante 4 et abritant les moyens d'inversion de poussée 5.

Les moyens d'inversion de poussée 5 sont du type dit "à grilles" bien connus.

Ils comprennent ainsi un capot 6 mobile en translation apte à passer alternativement, d'une part, d'une position de fermeture dans laquelle il couvre des grilles de déviation (non visibles) et assure la continuité structurelle et aérodynamique de la section médiane 2 permettant ainsi l'évacuation du flux froid à travers la veine en jet dit direct, et d'autre part, à une position d'ouverture vers l'aval de la nacelle dans laquelle il découvre les grilles de déviation, ouvrant alors un passage dans la nacelle, et bloque, lui-même ou par l'activation de moyens de blocage distincts, la veine en aval des grilles de déviation permettant ainsi la réorientation du flux froid selon un jet dit inversé.

Le capot d'inversion 6 assure la continuité aérodynamique d'un capot de soufflante (non visible) entourant le carter de soufflante 4.

Les moyens de blocage distincts peuvent être, par exemple, des volets d'inversion pivotants aval ou amont adaptés pour obstruer la veine de flux froid.

L'inverseur de poussée représenté à la figure 1 est du type à « O-duct », c'est-à-dire que le capot d'inversion de poussée 6 coulissant forme une pièce monobloc sensiblement annulaire s'étendant sans discontinuité d'un côté du pylône au côté opposé de ce pylône.

L'inverseur 5 comprend également des moyens de guidage (non illustrés) du capot 6 pouvant être constitués par des rails coulissant dans des glissières parallèles, les glissières étant parallèles à l'axe longitudinal de la nacelle 1 et attachées à des poutres longitudinales dite "à 12 heures" en regard du pylône de l'avion soit habituellement en haut de l'inverseur, les rails étant eux-mêmes attachés au capot 6 d'inversion de poussée.

Par ailleurs, les grilles de déviation sont supportées directement ou indirectement par un cadre avant 7 fermant l'épaisseur de la nacelle 1 en amont du capot 6 et destiné à être lié mécaniquement au carter de soufflante 4 par l'intermédiaire des moyens de liaison détachables.

Ce cadre avant a essentiellement la forme d'un anneau centré sur l'axe longitudinal de la nacelle 1 adapté pour supporter les grilles de déviation.

Les moyens de liaison détachables pourront être tout moyen connu, tel qu'un système de fixation de type couteau/gorge, des boulons, des systèmes de verrous, etc. Ils forment le premier chemin de passage d'effort entre le carter de soufflante 4 et le cadre avant 7.

Par ailleurs, l'activation de l'inverseur est, classiquement, effectuée par au moins un actionneur 10 de type vérin apte à entrainer en translation le capot 6 vers l'amont ou l'aval de la nacelle 1 entre ses différentes positions, ces vérins d'entraînement du capot 6 étant supportés, de façon classique, par des ferrures radiales du cadre avant 7.

En l'espèce, sur la figure 3 notamment, les vérins d'actionnement 10 de l'inverseur sont au nombre de quatre, à savoir deux situés à proximité du pylône de part et d'autre de ce dernier et deux en zone située à l'opposé, mais leur disposition sera bien évidemment adaptée au dispositif d'inversion de poussée utilisé.

Comme représenté notamment sur les figures 1 et 3, les vérins 10 sont, par ailleurs, reliés à un système de pilotage électrique 11 de type connu en soi.

Le système de pilotage peut, par exemple, être composé d'un moteur électrique et de son système électronique de puissance.

Bien entendu, l'invention s'applique également à des inverseurs de poussée actionnés par une puissance hydraulique ou pneumatique.

Par ailleurs, l'inverseur est équipé de plusieurs verrous principaux (non illustrés), connus de l'homme du métier et destinés à maintenir le capot 6 en position de fermeture et attaché classiquement au cadre avant 4. Ces verrous principaux peuvent être également intégrés aux moyens d'actionnement.

Ces verrous principaux pouvant devenir inopérant en cas de déformation du cadre avant 7 suite à un impact ou de la rupture d'un moyen d'actionnement s'ils y sont intégrés, l'inverseur comprend, également, au moins un verrou tertiaire attaché à un endroit différent des verrous principaux, verrou dont la fonction est d'éviter tout déplacement intempestif du capot 6 à la suite de la mise hors service des verrous principaux.

De plus, lors d'opérations de maintenance sur le turboréacteur ou la nacelle 1 l'entourant, il est important de s'assurer que le capot 6 ne peut pas s'ouvrir de manière inopinée, ce qui représenterait un danger pour les opérateurs.

De la même manière, si les verrous principaux et verrou tertiaire sont endommagés, il peut être nécessaire d'inhiber mécaniquement le capot mobile plutôt que de risquer un déploiement en vol.

L'inverseur peut comprendre, alors, au moins un dispositif d'inhibition électrique et/ou mécanique pour inhiber le capot 6 lors de ces opérations.

Les verrous tertiaire et/ou dispositifs d'inhibition évoqués vont être mis en place sur la circonférence de l'anneau du cadre avant 7 en partie inferieure dans la zone 6 heures notamment malgré l'absence de poutre inférieure, comme cela sera décrit plus précisément en référence aux figures 2 à 9.

Selon l'invention, en référence aux figures 2 et 3, la nacelle 1 comprend au moins une structure de renforcement 100 conçue pour transmettre des efforts entre le carter de soufflante 4 et le cadre avant 7, cette structure de renforcement 100 s'étendant suivant l'axe longitudinal de la nacelle 1 depuis le carter de soufflante 4 vers le cadre avant 7, cette structure de renforcement étant adaptée pour supporter une troisième ligne de défense et/ou un dispositif d'inhibition entre le cadre avant 7 et le capot 6 d'inversion de poussée.

Avantageusement, un passage d'effort supplémentaire est ainsi créé entre le carter de soufflante 4 et l'anneau du cadre avant 7 supportant les grilles de déviation, passage adapté pour être actif en cas d'éclatement d'un disque moteur ou tout autre impact pouvant détériorer l'inverseur de poussée et la rétention du cadre avant 7 supportant les grilles et le capot 6 d'inversion de poussée relativement au carter de soufflante 4.

Dans un premier mode de réalisation illustré sur la figure 2, au moins deux structures de renforcement 100 sont ménagées entre le carter de soufflante 4 et le cadre avant 7 et espacées angulairement le long de la circonférence de l'anneau du cadre avant 7, ceci afin de créer au moins deux passages d'effort indépendants entre le carter de soufflante 4 et le cadre avant 7.

L'espacement angulaire A entre les deux structures de renforcement 100 illustrées est conçu de sorte qu'elles sont suffisamment écartées l'un de l'autre angulairement de façon à ce qu'une seule puisse être impactée par un tiers de disque.

En référence aux figures 3 à 5, dans un mode de réalisation, chaque structure de renforcement 100 comprend un caisson 110 creux fixé sur sa longueur sur la circonférence de l'anneau du cadre avant 7 et adapté pour être fixé au niveau d'une extrémité amont au carter de soufflante 4.

Elle comprend, plus précisément, une première partie 101 formant caisson adaptée pour supporter un verrou et/ou un dispositif d'inhibition et une seconde partie 102 adaptée pour former part d'un dispositif de verrouillage entre le carter 4 et le cadre avant 7 activant le passage d'effort créé par la structure de renforcement 100.

La première partie 101 présente une structure de caisson creuse en forme de D renversé s'étendant longitudinalement suivant l'axe longitudinal de la nacelle 1 et s'étendant, également, dans un plan radial correspondant.

Elle comprend, ainsi, un profilé cylindrique 103 creux ouvert dont la concavité est dirigée vers la circonférence interne de l'anneau 7 du cadre avant.

Dans un exemple non limitatif, ce profilé 103 est mis en place entre deux grilles adjacentes.

Il est ainsi rattaché par des branches adaptées sur l'anneau 7 supportant les grilles de déviation.

La première partie 101 comprend, en outre, une plaque 104 longitudinale s'étendant au moins sur toute la longueur de l'anneau 7 et adaptée pour recouvrir le profilé 103 formant ainsi un caisson 110 ouvert à ses deux extrémités.

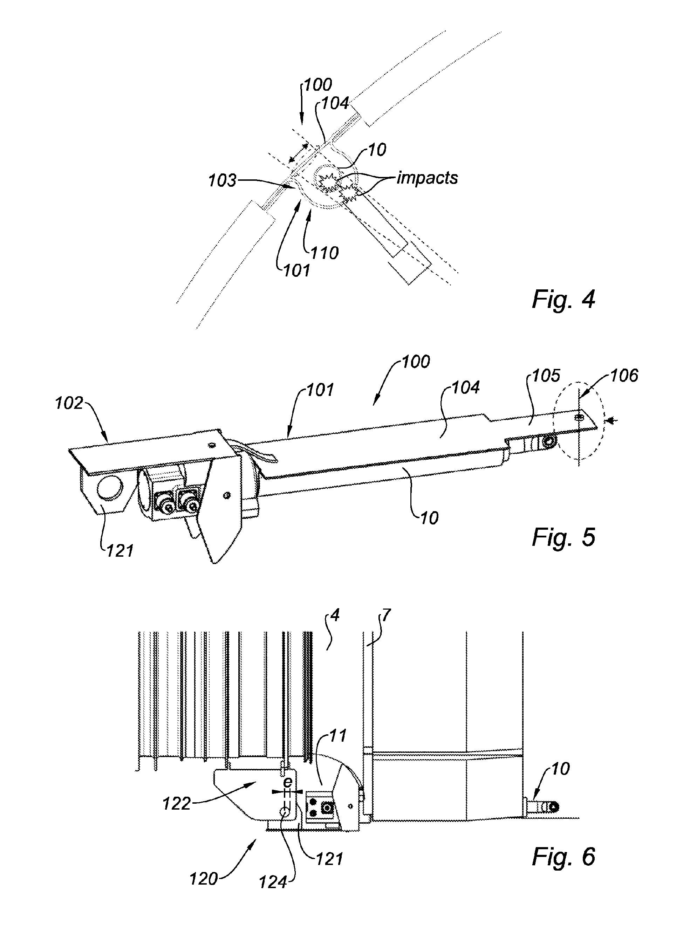

Cette plaque 104 est, également, rattachée par des branches adaptées sur l'anneau supportant les grilles de déviation, comme illustré sur la figure 4.

Il est à noter que le profilé 103 et la plaque 104 peuvent être formées d'une seul pièce ou non.

De plus, de préférence, ils sont en matériau métallique.

De préférence, chaque structure de renforcement 100 est montée à proximité des vérins d'actionnement 10 du capot 6 d'inversion de poussée.

Dans une variante de réalisation, chaque structure de renforcement 100 est adaptée pour recevoir et loger, chacune, un vérin 10 d'actionnement du capot 6.

Ceci offre l'avantage de faire participer les vérins 10 à la protection des passages d'effort créés par la présence des structures de renforcement 100.

En effet, par nature, les vérins 10 et le profilé 103 de la structure de renforcement 100 sont des pièces résistantes adaptées pour absorber une partie importante de l'énergie suite à l'impact d'un fragment, permettant à la plaque 104 d'être partiellement protégée de tout impact et d'assurer le passage d'effort entre le carter de soufflante 4 et le cadre avant 7, comme illustré sur la figure 4.

Le logement des vérins 10 dans les structures de renforcement 100 offre également l'avantage de réduire les épaisseurs des pièces de la structure de renforcement 100 dans la mesure où chaque vérin 10 participe à l'absorption de l'énergie des impacts de cette dernière comme on vient de le voir.

Comme illustré sur la figure 3, dans un exemple non limitatif, la nacelle 1 est ainsi équipée de quatre structures de renforcement 100 logeant quatre vérins d'actionnement 10, à savoir deux en partie supérieure de la nacelle et deux dans la partie inférieure dans une zone à 6 heures offrant ainsi quatre passages d'effort indépendants sur la circonférence de l'anneau 7 du cadre avant supportant les grilles de déviation, entre le carter de soufflante 4 et le cadre avant 7.

Par ailleurs, une telle structure de renforcement 100 offre l'avantage d'être résistante tout en répondant aux exigences de présenter un encombrement et une masse réduits.

Chaque structure de renforcement 100 s'étend, de part sa forme, angulairement sur un espace faible afin de pouvoir réaliser une zone résistante à tout impact sans engendrer un surpoids significatif de l'inverseur.

Par ailleurs, comme illustré plus particulièrement sur la figure 5, à son extrémité correspondante à la périphérie libre de l'anneau 7 du cadre avant, la plaque 104 est prolongée par une ferrure d'attache 105 adaptée pour attacher un dispositif d'inhibition ou un troisième verrou.

Dans cette ferrure d'attache 105, est ménagé un orifice 106 traversant adapté pour recevoir des moyens de fixation destinés à coopérer avec le dispositif d'inhibition ou un troisième verrou prévu.

Ainsi, comme illustré sur la figure 3 dans un exemple non limitatif, quatre chemins d'effort ainsi que quatre verrous tertiaires et /ou dispositifs d'inhibition sont répartis sur la circonférence de l'anneau 7 dont deux dans la zone 6 heures, malgré l'absence de poutre inferieure.

Avantageusement, il est ainsi possible de placer une troisième ligne de défense et / ou un dispositif d'inhibition de l'inverseur entre l'anneau du cadre avant 7 et le capot 6 d'un inverseur de type O-duct, à une position angulaire où ils sont facilement accessibles.

Par ailleurs, en référence aux figures 6 à 9, chaque structure de renforcement 100 est prolongée au delà du profilé 103, en amont du cadre avant 7, pour former partie du dispositif de verrouillage 120 du passage d'effort créé entre le carter de soufflante 4 et le cadre avant 7.

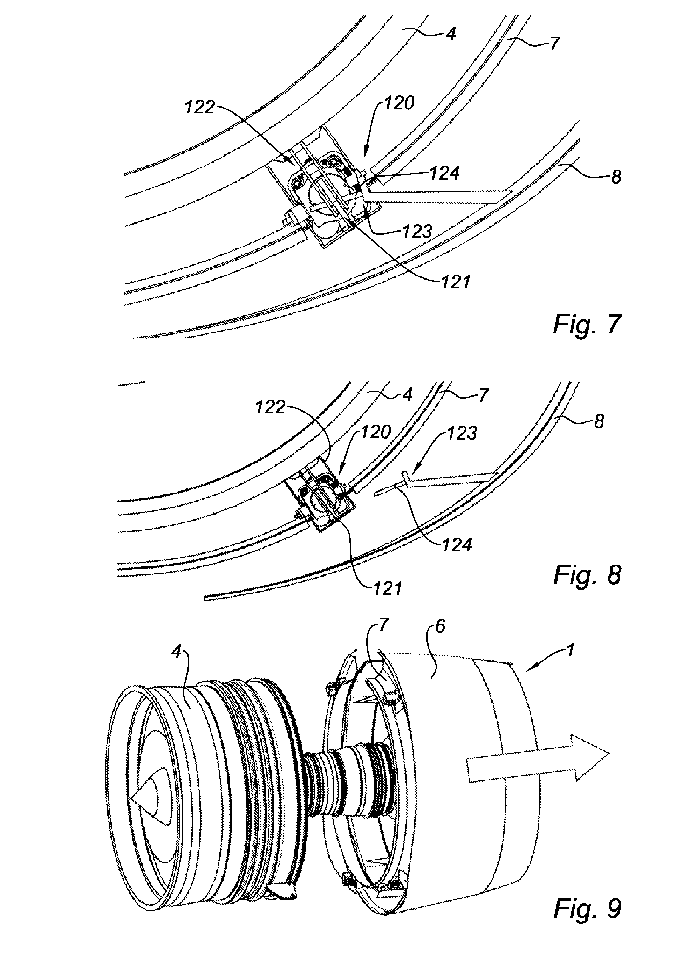

Dans une variante de réalisation, ce dispositif 120 comprend un organe de retenue 121 équipant la structure de renforcement 100 destiné à coopérer avec un organe de retenue 122 équipant le carter de soufflante 4, les deux organes de retenue 121,122 étant adaptés pour être verrouillées par un organe de verrouillage 123 complémentaire solidaire du capot de soufflante 8 (visible sur les figures 7 et 8).

Ce dispositif de verrouillage 120 s'étend dans un plan radial du carter de soufflante 4, depuis le carter de soufflante 4 vers le capot de soufflante 8 le recouvrant.

Selon une forme de réalisation de l'invention, les organes de retenue 121,122 peuvent être formés par des ferrures radiales prévues à cet effet.

Ainsi, plus précisément, le carter de soufflante 4 présente sur sa circonférence externe une ferrure 122 en U s'étendant radialement en direction de l'anneau 7 supportant les grilles de déviation.

Cette ferrure 122 comprend deux ailes parallèles qui définissent un espace ouvert dans lequel va venir s'insérer une ferrure 121 radiale ménagée sur la structure de renforcement 100.

La ferrure 121 de la structure de renforcement 100 est supportée par la deuxième partie de la structure 100 et, plus précisément par la face interne de la plaque 104 prolongée en amont du cadre avant 7, à son extrémité libre, comme illustré sur la figure 5.

Les deux ferrures 121,122 sont adaptées pour coopérer ensemble et avec l'organe de verrouillage 123 solidaire du capot de soufflante 4.

Elles comprennent, ainsi, chacune des alésages en regard susceptibles de recevoir et retenir lorsque nécessaire l'organe de verrouillage 123, ces alésages étant adaptés pour que l'organe de verrouillage 123, lorsqu'il traverse ces alésages fasse obstacle au déplacement du cadre avant 7 et de l'anneau correspondant.

Il est à noter que ces ferrures 121,122 et la deuxième partie 102 de la structure de renforcement 100 sont protégées des impacts notamment liés à la rupture d'un disque moteur ou tout autre impact par le carter de soufflante 4 lui-même.

Concernant l'organe de verrouillage 123 complémentaire, dans une variante de réalisation, il comprend une broche 124 de blocage mobile entre une position dans laquelle elle est écartée des organes de retenue 121,122 et permet une translation de l'ensemble cadre avant 7 - capot mobile 6 dans une position de maintenance de la structure externe et une position dans laquelle il vient en prise avec les organes de retenue 121,122 pour empêcher le coulissement de l'ensemble cadre avant 7 - capot mobile 6 en aval de la nacelle 1.

Cette broche 124 est montée sur la circonférence interne du capot de soufflante 8 dans un plan perpendiculaire au déplacement de l'ensemble cadre avant - capot dans une direction non radiale lui permettant de traverser l'espace ouvert entre les deux ailes de la ferrure 122 du carter de soufflante 4.

Avantageusement, ce dispositif de verrouillage 120 est indépendant du dispositif principal de verrouillage mis en place à l'interface entre l'anneau 7 du cadre avant et le carter de soufflante 4.

Ceci offre l'avantage de maintenir le passage d'effort créé par chaque structure de renforcement 100 en cas de défaillance de cette l'interface (défaillance non nécessairement liée à l'éclatement d'un rotor du moteur).

Pour cela, les moyens de commande du dispositif de verrouillage 120 sont liés à l'ouverture ou la fermeture du capot de soufflante 8.

Comme illustré sur la figure 8, l'ouverture du capot de soufflante 8 libère la broche 124 de blocage des alésages des ferrures 121,122 correspondantes et permet ainsi une translation vers l'aval de la nacelle 1 de l'ensemble du cadre avant 7-capot 6 dans une position de maintenance, illustrée sur la figure 9, pour permettre l'accès au moteur.

Par ailleurs, en référence à la figure 6, le dispositif de verrouillage 120 peut comprendre un jeu axial entre ses différentes parties constitutives de sorte que le passage d'effort supplémentaire créé par chaque structure de renforcement 100 ne soit actif que lorsque le passage d'effort principal entre le carter de soufflante 4 et la cadre avant 7 est perdu ou détérioré par un impact.

Ainsi, un jeu e est défini entre la circonférence externe de la broche 124 traversant les alésages des ferrures 121,122 et la circonférence interne de l'alésage correspondant de la ferrure 122 du carter de soufflante 4.

Ce jeu e est supprimé en cas de perte du passage d'effort principal entre le carter de soufflante 4 et le cadre avant 7, suite à l'éclatement d'un disque ou tout autre cas de panne, entraînant le verrouillage du carter de soufflante 4 et du cadre avant 7 par la broche 124 de blocage.

Bien évidemment, l'invention ne se limite pas aux formes de réalisation de la nacelle décrites ci-dessus à titre d'exemples, mais elle embrasse au contraire toutes les variantes possibles.

## Revendications

1. Nacelle de turboréacteur comprenant une structure fixe comprenant un carter de soufflante (4) dudit turboréacteur et un cadre avant (7) adapté pour être monté en aval dudit carter de soufflante (4) et supportant directement ou indirectement au moins un moyen de déviation de flux, ledit cadre avant étant apte à coopérer avec un capot (6) d'inversion de poussée coulissant entre une position de fermeture recouvrant le moyen de déviation de flux et une position d'ouverture exposant ce moyen de déviation de flux permettant un flux dévié, ladite nacelle comprend, en outre, au moins une structure de renforcement (100) conçue pour transmettre des efforts entre le carter de soufflante (4) et le cadre avant (7), **caractérisée en ce que** ladite structure de renforcement (100) s'étendant suivant l'axe longitudinal de la nacelle depuis le carter de soufflante (4) vers le cadre avant (7) et étant adaptée pour supporter une troisième ligne de défense et/ou un dispositif d'inhibition entre le cadre avant (7) et le capot (6) d'inversion de poussée.

2. Nacelle selon la revendication 1, **caractérisée en ce que** la structure de renforcement (100) comprend un caisson (110) creux fixé sur sa longueur sur la circonférence du cadre avant (7) et adapté pour être fixé au niveau d'une extrémité amont au carter de soufflante (4).

3. Nacelle selon la revendication 1, **caractérisée en ce qu'**elle comprend au moins deux structures de renforcement (100) espacées angulairement le long de la circonférence du cadre avant (7).

4. Nacelle selon la revendication 3, **caractérisée en ce que** l'espacement angulaire entre les deux structures de renforcement (100) est conçu de sorte qu'elles sont suffisamment écartées l'un de l'autre angulairement de façon à ce qu'une seule peut être impactée par l'éclatement d'un tiers de disque moteur.

5. Nacelle selon l'une des revendications 3 à 4, **caractérisée en ce qu'**elle comprend deux structures de renforcement (100) disposées dans une zone « 6 heures ».

6. Nacelle selon l'une des revendications 1 à 5, **caractérisée en ce que** chaque structure de renforcement (100) est montée entre deux moyens de déviation adjacents.

7. Nacelle selon l'une des revendications 1 à 6, **caractérisée en ce que** chaque structure de renforcement (100) est montée à proximité d'actionneurs (10) du capot (6).

8. Nacelle selon la revendication 7, **caractérisée en ce que** chaque structure de renforcement (100) est adaptée pour recevoir, chacune, un actionneur (10) du capot (6).

9. Nacelle selon l'une des revendications 1 à 8, **caractérisée en ce que** la structure de renforcement (100) est prolongée par une ferrure d'attache (105) adaptée pour fixer un dispositif d'inhibition de l'inverseur de la nacelle et/ou une troisième ligne de défense.

10. Nacelle selon l'une des revendications 1 à 9, **caractérisée en ce qu'**elle comprend, en outre, un dispositif de verrouillage (120) du passage d'effort créé entre le carter de soufflante (4) et le cadre avant (7) par la structure de renforcement (100).

11. Nacelle selon la revendication 10, **caractérisée en ce que** le dispositif de verrouillage (120) comprend un organe de retenue (121) équipant la structure de renforcement (100) destiné à coopérer avec un organe de retenue (122) équipant le carter de soufflante (4), les deux organes de retenue (121,122) étant adaptés pour être verrouillées par un organe de verrouillage (123) complémentaire solidaire d'un capot de soufflante (8) destiné à recouvrir le carter de soufflante (4).

12. Nacelle selon l'une des revendications 10 à 11, **caractérisée en ce que** le dispositif de verrouillage (120) s'étend dans un plan radial du carter de soufflante (4).

13. Nacelle selon la revendication 11, **caractérisée en ce que** les organes de retenue (121,122) sont formés par des ferrures radiales comprenant, chacune, un alésage en regard susceptible de recevoir et retenir lorsque nécessaire l'organe de verrouillage (123), ces alésages étant adaptés pour que l'organe de verrouillage (123), lorsqu'il traverse ces alésages, fasse obstacle au déplacement du cadre avant (7).

14. Nacelle selon la revendication 11, **caractérisée en ce que** l'organe de verrouillage (123) comprend une broche (124) de blocage mobile entre une position dans laquelle elle est écartée des organes de retenue (121,122) et permet une translation du cadre avant (7) et une position dans laquelle elle vient en prise avec les organes de retenue (121,122) pour empêcher le coulissement du cadre avant (7) en aval de la nacelle (1).

15. Nacelle selon la revendication 11, **caractérisée en ce que** les moyens de commande du dispositif de verrouillage (120) sont liés à l'ouverture ou la fermeture du capot de soufflante (8).

## Patentansprüche

1. Triebwerksgondel, die eine stationäre Struktur umfasst, die einen Gebläsemantel (4) des Triebwerks und einen vorderen Rahmen (7), der angepasst ist, um stromabwärts des Gebläsemantels (4) montiert zu werden und der direkt oder indirekt mindestens ein Stromumleitungsmittel stützt, umfasst, wobei der vordere Rahmen geeignet ist, mit einer Haube (6) zur Schubumkehrung zusammenzuwirken, die zwischen einer Schließposition, die das Stromumleitungsmittel abdeckt, und einer Öffnungsposition, die dieses Stromumleitungsmittel freilegt, indem ein umgelenkter Strom erlaubt wird, gleitet, wobei die Gondel außerdem mindestens eine Verstärkungsstruktur (100) umfasst, die ausgelegt ist, um Kräfte zwischen dem Gebläsemantel (4) und dem vorderen Rahmen (7) zu übertragen, **dadurch gekennzeichnet, dass** sich die Verstärkungsstruktur (100) entlang der Längsachse der Gondel von dem Gebläsemantel (4) zu dem vorderen Rahmen (7) erstreckt und angepasst ist, um eine dritte Verteidigungslinie und/oder eine Inhibitionsvorrichtung zwischen dem vorderen Rahmen (7) und der Schubumkehrhaube (6) zu tragen.

2. Gondel nach Anspruch 1, **dadurch gekennzeichnet, dass** die Verstärkungsstruktur (100) einen hohlen Kasten (110) umfasst, der auf seiner Länge auf dem Umfang des vorderen Rahmens (7) befestigt und geeignet ist, um im Bereich eines stromaufwärtigen Endes an dem Gebläsemantel (4) befestigt zu sein.

3. Gondel nach Anspruch 1, **dadurch gekennzeichnet, dass** sie mindestens zwei Verstärkungsstrukturen (100) umfasst, die winkelig entlang des Umfangs des vorderen Rahmens (7) beabstandet sind.

4. Gondel nach Anspruch 3, **dadurch gekennzeichnet, dass** die winkelige Beabstandung zwischen den zwei Verstärkungsstrukturen (100) derart ausgelegt ist, dass sie ausreichend voneinander winkelig derart beabstandet sind, dass das Bersten eines Motorscheibendrittels nur auf eine einzige einwirken kann.

5. Gondel nach einem der Ansprüche 3 bis 4, **dadurch gekennzeichnet, dass** sie zwei Verstärkungsstrukturen (100) umfasst, die in einer "6-Uhr-Zone" angeordnet sind.

6. Gondel nach einem der Ansprüche 1 bis 5, **dadurch gekennzeichnet, dass** die Verstärkungsstruktur (100) zwischen zwei benachbarte Umlenkmittel montiert ist.

7. Gondel nach einem der Ansprüche 1 bis 6, **dadurch gekennzeichnet, dass** die Verstärkungsstruktur (100) in der Nähe von Stellantrieben (10) der Haube (6) montiert ist.

8. Gondel nach Anspruch 7, **dadurch gekennzeichnet, dass** jede Verstärkungsstruktur (100) angepasst ist, um jeweils einen Stellantrieb (10) der Haube (6) aufzunehmen.

9. Gondel nach einem der Ansprüche 1 bis 8, **dadurch gekennzeichnet, dass** die Verstärkungsstruktur (100) durch einen Befestigungsbeschlag (105) verlängert ist, der angepasst ist, um eine Inhibitionsvorrichtung des Umkehrers der Gondel und/oder eine dritte Verteidigungslinie zu befestigen.

10. Gondel nach einem der Ansprüche 1 bis 9, **dadurch gekennzeichnet, dass** sie außerdem eine Verriegelungsvorrichtung (120) der Kraftpassage, die zwischen dem Gebläsemantel (4) und dem vorderen Rahmen (7) durch die Verstärkungsstruktur (100) geschaffen wird, umfasst.

11. Gondel nach Anspruch 10, **dadurch gekennzeichnet, dass** die Verriegelungsvorrichtung (120) ein Halteelement (121) umfasst, das die Verstärkungsstruktur (100) ausstattet, das dazu bestimmt ist, mit einem Halteelement (122), das den Gebläsemantel (4) ausstattet, zusammenzuwirken, wobei die zwei Halteelemente (121, 122) angepasst sind, um durch ein komplementäres Verriegelungsorgan (123), das fest mit einer Gebläsehaube (8), die dazu bestimmt ist, den Gebläsemantel (4) abzudecken, verbunden ist, verriegelt zu werden.

12. Gondel nach einem der Ansprüche 10 bis 11, **dadurch gekennzeichnet, dass** sich die Verriegelungsvorrichtung (120) in einer Ebene radial zum Gebläsemantel (4) erstreckt.

13. Gondel nach Anspruch 11, **dadurch gekennzeichnet, dass** die Halteelemente (121, 122) durch radiale Beschläge ausgebildet sind, die jeweils eine Bohrung in Gegenüberlage umfassen, die bei Bedarf das Verriegelungselement (123) aufnehmen und halten kann, wobei diese Bohrungen angepasst sind, damit sich das Verriegelungsorgan (123), wenn es diese Bohrungen durchquert, der Bewegung des vorderen Rahmens (7) widersetzt.

14. Gondel nach Anspruch 11, **dadurch gekennzeichnet, dass** das Verriegelungsorgan (123) einen Blockierungsstift (124) umfasst, der zwischen einer Position, in der er von den Halteelementen (121, 122) beabstandet ist und eine Verschiebung des vorderen Rahmens (7) erlaubt, und einer Position, in der er mit den Halteelementen (121, 122) in Eingriff kommt, um das Gleiten des vorderen Rahmens (7) stromabwärts der Gondel (1) zu verhindern, beweglich ist.

15. Gondel nach Anspruch 11, **dadurch gekennzeichnet, dass** die Steuermittel der Verriegelungsvorrichtung (120) mit dem Öffnen oder dem Schließen der Gebläsehaube (8) verbunden sind.

## Claims

1. A turbojet engine nacelle comprising a stationary structure comprising a fan casing (4) of said turbojet engine and a front frame (7) suitable for being mounted downstream of said fan casing (4) and directly or indirectly supporting at least one flow diverting means, said front frame being capable of cooperating with a thrust reverser cowl (6) sliding between a closed position covering the flow diverting means and an open position exposing this flow diverting means allowing a diverted flow, said nacelle further, comprises, at least one reinforcing structure (100) designed for transmitting forces between the fan casing (4) and the front frame (7), **characterized in that** said reinforcing structure (100) extending along the longitudinal axis of the nacelle from the fan casing (4) toward the front frame (7) and being suitable to bear a third line of defense and/or an inhibiting device between the front frame (7) and the thrust reversal cowl (6).

2. The nacelle according to claim 1, **characterized in that** the reinforcing structure (100) comprises a hollow box (110) secured on the length thereof over the circumference of the front frame (7) and suitable for being secured at an upstream end to the fan casing (4).

3. The nacelle according to claim 1, **characterized in that** it comprises at least two reinforcing structures (100) angularly spaced apart along the circumference of the front frame (7).

4. The nacelle according to claim 3, **characterized in that** the angular spacing between the two reinforcing structures (100) is designed such that they are sufficiently angularly separated from each other so that only one can be impacted by the bursting of a third of the driving disk.

5. The nacelle according to any of claims 3 to 4, **characterized in that** it comprises two reinforcing structures (100) disposed in a "six o'clock" area.

6. The nacelle according to any of claims 1 to 5, **characterized in that** each reinforcing structure (100) is mounted between two adjacent diverting means.

7. The nacelle according to any of claims 1 to 6, **characterized in that** each reinforcing structure (100) is mounted in the vicinity of actuators (10) of the cowl (6).

8. The nacelle according to claim 7, **characterized in that** each reinforcing structure (100) is suitable for each one, to receive, an actuator (10) of the cowl (6).

9. The nacelle according to any of claims 1 to 8, **characterized in that** the reinforcing structure (100) is extended by a fastener plating (105) suitable for securing a device for inhibiting the reverser of the nacelle and/or a third line of defense.

10. The nacelle according to any of claims 1 to 9, **characterized in that** it further, comprises, a device (120) for locking the force passage created between the fan casing (4) and the front frame (7) by the reinforcing structure (100).

11. The nacelle according to claim 10, **characterized in that** the locking device (120) comprises a retaining member (121) equipping the reinforcing structure (100) designed to cooperate with a retaining member (122) equipping the fan casing (4), the two retaining members (121, 122) being suitable to be locked by a complementary locking member (123) secured to a fan cowl (8) intended to receive the fan casing (4).

12. The nacelle according to any of claims 10 to 11, **characterized in that** the locking device (120) extends in a radial plane of the fan casing (4).

13. The nacelle according to claim 11, **characterized in that** the retaining members (121, 122) are formed by radial platings each comprising, an opposite bore liable of receiving and retaining, when necessary, the locking member (123), these bores being adapted so that when the locking member (123) crosses through these bores, it blocks the displacement of the front frame (7).

14. The nacelle according to claim 11, **characterized in that** the locking member (123) comprises a locking pin (124) movable between a position in which it is separated from the retaining members (121, 122) and allows a translation of the front frame (7), and a position in which it engages with the retaining members (121, 122) to prevent the front frame (7) from sliding downstream of the nacelle (1).

15. The nacelle according to claim 11, **characterized in that** the means for controlling the locking device (120) are connected to the opening and closing of the fan cowl (8).
